# EUROPÄISCHE PATENTSCHRIFT

(11) **EP 3 054 367 B1**
(45) Veröffentlichungstag und Bekanntmachung des Hinweises auf die Patenterteilung: **03.06.2020**
(21) Anmeldenummer: 16152315.4
(22) Anmeldetag: 21.01.2016
(51) Int. Cl.: E01H 4/02, G05G 9/047

(54) **FAHRZEUG, INSBESONDERE KETTENFAHRZEUG ZUR SCHNEEPISTENGESTALTUNG UND -PFLEGE**
VEHICLE, IN PARTICULAR TRACKED VEHICLE FOR PISTE DESIGN AND MAINTENANCE
VEHICULE, EN PARTICULIER VEHICULE A CHENILLE DESTINE A L'ENTRETIEN ET AU DAMAGE DE PISTES DE SKI

(30) Priorität: 06.02.2015 DE 102015202103
(43) Veröffentlichungstag der Anmeldung: 10.08.2016
(73) Patentinhaber: Kässbohrer Geländefahrzeug AG, 88471 Laupheim (DE)
(72) Erfinder: Frankenhauser, Klaus, 88487 Baltringen (DE); Jöchl, Andrew, Linville, NC 28646 (US); Mack, Franz, 88457 Kirchdorf (DE)
(74) Vertreter: Patentanwälte Ruff, Wilhelm, Beier, Dauster & Partner mbB

(56) Entgegenhaltungen:
- CN-A- 102 505 719
- DE-C- 951 763
- SU-A1- 739 505
- US-A1- 2012 152 719
- US-B1- 6 354 023

## Beschreibung

Die Erfindung betrifft ein Fahrzeug, insbesondere ein Kettenfahrzeug zur Schneepistengestaltung und -pflege, mit einem Fahrerhaus, in dem ein Handsteuerhebel um wenigstens drei zueinander verschiedene Raumachsen drehbar angeordnet ist, wobei jeder Drehbeweglichkeit jeweils eine Steuerfunktion wenigstens eines fahrzeugseitig angeordneten Funktionsteils zugeordnet ist, wobei eine erste und eine zweite Raumachse einander in einer gemeinsamen Ebene kreuzen und eine Längs- und Querschwenkbarkeit des in Hochrichtung ausgerichteten Handsteuerhebels definieren, und wobei die dritte Raumachse durch eine Hochachse gebildet ist, die durch einen Kreuzungspunkt der beiden sich kreuzenden ersten und zweiten Raumachsen verläuft.

Ein derartiges Kettenfahrzeug in Form einer Pistenraupe ist aus der DE 10 2007 018 246 A1 bekannt. Das bekannte Kettenfahrzeug weist ein Fahrerhaus auf, in dem seitlich neben einer fahrerseitigen Sitzposition ein Handsteuergerät positioniert ist, das für eine Handauflage durch einen Fahrer des Kettenfahrzeugs ausgebildet ist. Das Handsteuergerät umfasst einen Handsteuerhebel, der um insgesamt drei zueinander verschiedene Raumachsen manuell durch eine Hand des Fahrers schwenkbar und drehbar ist. Die drei Raumachsen umfassen eine in Fahrzeughochrichtung erstreckte Hochachse sowie zwei Schwenkachsen, die rechtwinklig zueinander in einer horizontalen Ebene ausgerichtet sind. Durch die Dreh- und Schwenkbarkeit des Handsteuerhebels sind verschiedene Fahr- und Zusatzfunktionen des Kettenfahrzeugs steuerbar. Dabei ist es dem Fahrer überlassen, welchen Freiheitsgrad des Handsteuerhebels er welcher Fahr- oder Zusatzfunktion des Kettenfahrzeugs zuordnet. So ist die Schwenkbarkeit des Handsteuerhebels für Fahrrichtung, für Fahrgeschwindigkeit oder für Verschwenkungen von Anbaugeräten wie einem frontseitigen Räumschild oder Ähnlichem vorgesehen.

Aufgabe der Erfindung ist es, ein Fahrzeug der eingangs genannten Art zu schaffen, das eine gegenüber dem Stand der Technik weiter verbesserte Bedienbarkeit durch einen Fahrer ermöglicht.

Diese Aufgabe wird dadurch gelöst, dass der Handsteuerhebel einen relativ zu dem Handsteuerhebel um eine vierte Raumachse drehbeweglich gelagerten Handauflagekörper aufweist, der in Abstand oberhalb des Kreuzungspunkts um die vierte Raumachse begrenzt drehbar gelagert ist. Durch die erfindungsgemäße Lösung kann der Fahrer, d.h. der Führer des Fahrzeugs, über den Handsteuerhebel noch mehr Funktionen ansteuern, als dies beim Stand der Technik der Fall ist. Die erfindungsgemäße Lösung ermöglicht eine besonders intuitive Bedienbarkeit des Handsteuerhebels durch den Fahrer. In vorteilhafter Weise dienen über den Handsteuerhebel ansteuerbare Funktionen des Fahrzeugs dazu, Anbaugeräte des Fahrzeugs wie einen frontseitigen Räumschild, eine Winde oder Ähnliches zu steuern. Besonders vorteilhaft ist das Fahrzeug als Kettenfahrzeug, insbesondere in Form einer Pistenraupe zur Schneepistengestaltung und -pflege, ausgestaltet. In vorteilhafter Weise ist eine Sitzposition des Fahrers auf einer - in Fahrtrichtung gesehen - linken Seite des Fahrerhauses. Die Bedienung des Handsteuerhebels erfolgt mit einer rechten Hand des Fahrers, wohingegen eine linke Hand des Fahrers dazu dient, Lenk- und Fahrbewegungen des Kettenfahrzeugs über ein Steuerrad oder ein ähnlich gestaltetes Steuerelement zu steuern.

Erfindungsgemäß ist jeder der vier Drehbeweglichkeiten des Handsteuerhebels jeweils eine Stelleinheit eines frontseitigen Räumschilds zugeordnet, die vier unterschiedliche Stellbeweglichkeiten des Räumschilds ansteuern. Dadurch ist mittels des Handsteuerhebels der frontseitige Räumschild intuitiv und hochgenau ansteuerbar. Entsprechende Stellbeweglichkeiten des Räumschilds sind Verschwenkungen des Räumschilds um eine zentrale Hochachse, Kippbewegungen um eine in Fahrzeuglängsrichtung erstreckte, zentrale Fahrzeuglängsachse, Hub- und Senkbewegungen des frontseitigen Räumschilds in seiner Gesamtheit sowie Kippbewegungen des Räumschilds um eine Fahrzeugquerachse, wodurch eine Neigung einer Räumfläche des Räumschilds relativ zum Untergrund verändert werden kann. In vorteilhafter Weise werden die Stelleinheiten durch hydraulische Stellzylinder gebildet, die über entsprechende Hydrauliksteuerkreise angesteuert werden. Der Handsteuerhebel ist vorzugsweise elektronisch mit einer Steuereinheit für die Stellzylinder in Wirkverbindung, wobei entsprechende elektronische Drehsignale des Handsteuerhebels in hydraulische Steuerbefehle umgesetzt werden.

In weiterer Ausgestaltung der Erfindung sind die erste und die zweite Raumachse in einem Doppelachsgelenk, insbesondere in einem Kugelgelenk, integriert, und die Drehbeweglichkeit um die Hochachse ist durch ein in Abstand oberhalb des Doppelachsgelenks angeordnetes Drehgelenk definiert. Durch die räumliche Trennung des Doppelachsgelenks und des Drehgelenks ist eine vereinfachte elektronische Erfassung entsprechender Dreh- oder Schwenkbewegungen des Handsteuerhebels erzielbar, wodurch eine verbesserte Übertragung dieser Bewegungen auf Stellbewegungen eines entsprechenden Funktionsteils des Kettenfahrzeugs gewährleistet ist. In vorteilhafter Weise werden Drehbewegungen des Handsteuerhebels um die Hochachse über Dehnmessstreifen und Dreh- oder Schwenkbewegungen des Handsteuerhebels um das Doppelachsgelenk über Hall-Sensoren erfasst.

In weiterer Ausgestaltung der Erfindung ist der Handauflagekörper um die vierte Raumachse mittels eines Kippgelenks relativ zu dem Handsteuerhebel gelagert. Das Kippgelenk ist derart gestaltet, dass es zwei Drehfreiheitsgrade zulässt, d.h. Drehbewegungen in entgegengesetzten Richtungen um eine einzelne Achse, nämlich die vierte Raumachse.

In weiterer Ausgestaltung der Erfindung sind die erste und die zweite Raumachse des Doppelachsgelenks in einer zumindest weitgehend horizontalen Fahrzeugebene angeordnet, wobei die erste Raumachse zumindest weitgehend in einer Fahrzeugquerrichtung und die zweite Raumachse rechtwinklig hierzu zumindest weitgehend in einer Fahrzeuglängsrichtung erstreckt sind. Die Ausrichtung der Raumachsen orientiert sich an der Sitzposition des Fahrers. Üblicherweise ist die Sitzposition des Fahrers innerhalb des Fahrerhauses in Fahrzeuglängsrichtung ausgerichtet. Bei einer derartigen Ausrichtung erstreckt sich auch die zweite Raumachse exakt in Fahrzeuglängsrichtung und die erste Raumachse exakt in Fahrzeugquerrichtung. Damit sind bei einer derartigen Orientierung die erste und die zweite Raumachse auch in einer exakt horizontalen Fahrzeugebene ausgerichtet. Bei diesen Definitionen wird davon ausgegangen, dass das Fahrzeug auf einem horizontalen Untergrund steht und demzufolge selbst exakt horizontal ausgerichtet ist.

In weiterer Ausgestaltung der Erfindung ist die Hochachse des Drehgelenks zumindest weitgehend in Fahrzeughochrichtung erstreckt, und die vierte Raumachse des Kippgelenks erstreckt sich zumindest weitgehend parallel zu der in Fahrzeugquerrichtung erstreckten ersten Raumachse. Falls die erste und die zweite Raumachse exakt in Fahrzeugquerrichtung und Fahrzeuglängsrichtung ausgerichtet sind, erstreckt sich auch die Hochachse exakt in Fahrzeughochrichtung unter den zuvor genannten Bedingungen. Die vierte Raumachse weist in Fahrzeugquerrichtung, kann jedoch zu einer Fahrzeugquerachse sowohl in Hochrichtung als auch in Längsrichtung um Winkel zwischen 0 und 30° abweichen, je nachdem, inwieweit eine entsprechende Schrägstellung einer ergonomischen Bedienbarkeit der entsprechenden Drehbewegung des Handauflagekörpers um das Kippgelenk durch die rechte Hand des Fahrers entgegenkommt.

In weiterer Ausgestaltung der Erfindung sind dem Doppelachsgelenk wenigstens für die erste Raumachse gegensinnig zueinander wirksame Federrückstellmittel für eine drehmomentabhängige Mittelausrichtung des Handsteuerhebels relativ zu der ersten Raumachse zugeordnet. Die erste Raumachse erstreckt sich zumindest weitgehend in Fahrzeugquerrichtung. Die Mittelausrichtung über die Federrückstellmittel gewährleistet, dass der Handsteuerhebel sich nach Wegnahme einer Belastung durch eine Handinnenfläche des Fahrers automatisch in seien zentrale Mittelstellung ausrichtet.

In weiterer Ausgestaltung der Erfindung sind dem Kippgelenk gegensinnig zueinander wirksame Federelemente für eine drehmomentabhängige Rückstellung des Handauflagekörpers in eine Mittelstellung zugeordnet. Damit ist gewährleistet, dass auch der Handauflagekörper nach Wegnahme einer Belastung durch eine Hand des Fahrers zwangsläufig über die Federelemente in die Mittelstellung zurückgedreht wird. Vorzugsweise sind sowohl im Bereich des Kippgelenks zwei gegensinnig zueinander wirkende Federelemente als auch im Bereich des Doppelachsgelenks bezüglich der zweiten Raumachse zwei gegensinnig zu einander wirksame Federrückstellmittel vorgesehen, die an dem Doppelachsgelenk bzw. an dem Kippgelenk angreifen.

In weiterer Ausgestaltung der Erfindung sind Rückstellkräfte der Federelemente und der Federrückstellmittel in Bezug auf Drehmomentverhältnisse bezüglich des Kippgelenks und bezüglich der ersten Raumachse des Doppelachsgelenks derart ausgeführt, dass eine auf den Handauflagekörper wirkende, zumindest weitgehend in Fahrzeuglängsrichtung ausgerichtete Verschiebekraft des Fahrers zu einer Auslenkung des Handsteuerhebels um die erste Raumachse des Doppelachsgelenks führt, und dass der Handauflagekörper bei Aufbringen der Verschiebekraft in seiner Mittelstellung verbleibt. Dadurch ist gewährleistet, dass der Fahrer beim Verschwenken des Handsteuerhebels um die erste Raumachse nicht versehentlich auch den Handauflagekörper aus seiner Mittelstellung herausbewegt, so dass eine eindeutige Verstellbarkeit des Handsteuerhebels um die erste Raumachse gewährleistet ist, falls der Fahrer eine ausschließliche Verstellung um diese erste Raumachse wünscht.

In weiterer Ausgestaltung der Erfindung ist der Handsteuerhebel derart zu einer Sitzposition des Fahrers ausgerichtet, dass die Verschiebekraft zur Auslenkung des Handsteuerhebels um die erste Raumachse durch eine Unterarmverschiebung des Fahrers aufbringbar ist. Dabei ist die erste Raumachse vorzugsweise zumindest weitgehend orthogonal zu einer Verschieberichtung des Unterarms.

In weiterer Ausgestaltung der Erfindung sind der Handauflagekörper und das Kippgelenk relativ zum Handsteuerhebel derart zu der Sitzposition des Fahrers ausgerichtet, dass eine Kippbewegung eines Handgelenks des Fahrers bei aufgelegter Hand nach oben oder nach unten zu einer Auslenkung des Handauflagekörpers relativ zu der Mittelstellung führt. Diese Orientierung relativ zur Sitzposition des Fahrers ermöglicht eine etwa parallele Ausrichtung der Handgelenkskippachse zu der vierten Raumachse, so dass der Handauflagekörper besonders intuitiv durch eine Handgelenksbewegung der Hand des Fahrers verdreht werden kann.

Erfindungsgemäß ist der frontseitige Räumschild relativ zu einem Fahrgestell des Kettenfahrzeugs um vier unterschiedliche Stellachsen verschwenkbar, von denen jede etwa parallel zu jeweils einer der vier Raumachsen des Handsteuerhebels ausgerichtet ist. Dies ermöglicht eine besonders intuitive Verstellung des Räumschilds mittels des Handsteuerhebels einschließlich des Handauflagekörpers, da Dreh- und Schwenkbewegungen des Handsteuerhebels bzw. des Handauflagekörpers immer gleichgerichtete Schwenk- oder Kippbewegungen des Räumschilds bewirken. Hierdurch wird eine besonders einfache Erlernbarkeit der Bedienung des Handsteuerhebels durch eine Bedienperson erzielt.

In weiterer Ausgestaltung der Erfindung weist der Handsteuerhebel im Bereich des Handauflagekörpers weitere manuell betätigbare Bedienelemente auf, die derart zu einer Handauflagefläche des Handauflagekörpers angeordnet sind, dass der Fahrer die Bedienelemente bei aufgelegter Hand mit jeweils wenigstens einem Finger der aufgelegten Hand bedienen kann. Hierdurch ist es möglich, weitere Steuerfunktionen von Funktionsteilen des Kettenfahrzeugs mit wenig Aufwand anzusteuern. Die Anordnung der Bedienelemente ist ergonomisch besonders günstig für die rechte Hand des Fahrers.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch eine Ausführungsform eines erfindungsgemäßen Fahrzeugs in Form eines Kettenfahrzeugs,
- Fig. 2: ebenfalls schematisch eine perspektivische Darstellung einer Anordnung eines Handsteuerhebels im Bereich einer Sitzposition innerhalb eines Fahrerhauses des Kettenfahrzeugs nach Fig. 1,
- Fig. 3: ein perspektivisches Schema von Funktionen und Bewegungsmöglichkeiten des Handsteuerhebels nach Fig. 2,
- Fig. 4: schematisch in perspektivischer Darstellung einen frontseitigen Räumschild des Kettenfahrzeugs nach Fig. 1 mit Pfeilen, die Stellwege des Räumschilds abhängig von Steuerbewegungen des Handsteuerhebels nach Fig. 3 symbolisieren und
- Fig. 5: in schematischer Schnittdarstellung längs einer vertikalen Fahrzeuglängsebene den Handsteuerhebel nach den Fig. 2 und 3.

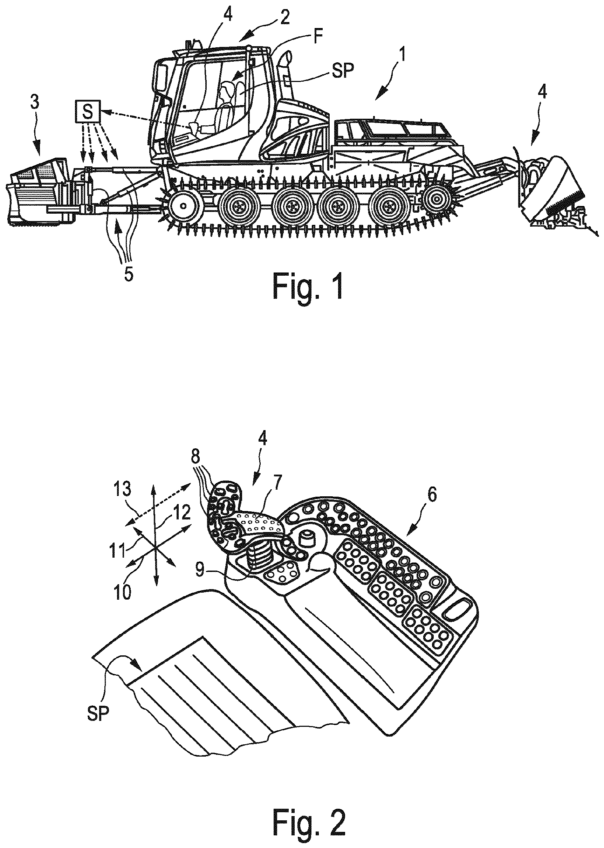

Ein Kettenfahrzeug 1 nach Fig. 1 ist als Pistenraupe zur Gestaltung und Pflege von Schneegelände ausgeführt. Das Kettenfahrzeug 1 gemäß den Fig. 1 bis 5 ist besonders vorteilhaft für eine Funparkgestaltung in Ski- und Snowboardgebieten einsetzbar. Das Kettenfahrzeug 1 weist in grundsätzlich bekannter Weise ein Fahrgestell sowie auf gegenüberliegenden Seiten des Fahrgestells jeweils ein Kettenlaufwerk auf. Frontseitig - in normaler Fahrtrichtung des Kettenfahrzeugs 1 gesehen - ist auf dem Fahrgestell ein Fahrerhaus 2 angeordnet. In dem Fahrerhaus 2 ist eine fahrerseitige Sitzposition SP vorgesehen, auf der im Betrieb des Kettenfahrzeugs 1 ein Fahrer F Platz nimmt, der das Kettenfahrzeug 1 steuert.

Frontseitig ist dem Kettenfahrzeug 1 ein Räumschild 3 zugeordnet, der über Gelenkanordnungen sowie hydraulische Stellzylinder 5 an dem Fahrgestell des Kettenfahrzeugs 1 beweglich gelagert ist.

Wie anhand der Fig. 2 erkennbar ist, ist der fahrerseitigen Sitzposition SP, die in normaler Fahrtrichtung des Kettenfahrzeugs 1 innerhalb des Fahrerhauses 2 ausgerichtet ist, auf einer rechten Seite ein Handsteuerhebel 4 zugeordnet, den der Fahrer F mit seiner rechten Hand ergreifen kann. Der Handsteuerhebel 4 ist in einer Bedienerplattform 6 integriert, die der Sitzposition SP ortsfest zugeordnet ist. Das Bedienerpanel 6 weist neben einer Armauflagefläche eine Vielzahl von in Gruppen zusammengefassten Bedienelementen auf, die zur Steuerung von Zusatzfunktionen des Kettenfahrzeugs 1 eingesetzt werden.

Der Handsteuerhebel 4 weist einen von einer Konsole innerhalb der Bedienerplattform 6 in Fahrzeughochrichtung nach oben ragenden Schaft 9 auf (Fig. 2, 3 und 5). Der Schaft 9 ist mittels eines als Kugelgelenk ausgeführten Mehrachsgelenks 14 in einem Trägergehäuse 17 der Konsole um zwei Raumachsen 10, 11 verschwenkbar gelagert. Eine erste Raumachse 10 ist bei der anhand der Fig. 2, 3 und 5 dargestellten Ausführungsform horizontal in Fahrzeugquerrichtung erstreckt. Eine zweite Raumachse 11 ist horizontal in Fahrzeuglängsrichtung erstreckt und kreuzt die erste Raumachse 10.

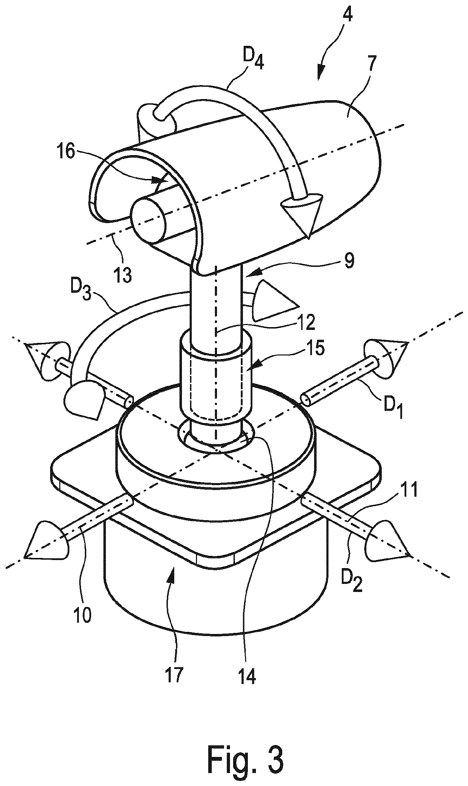

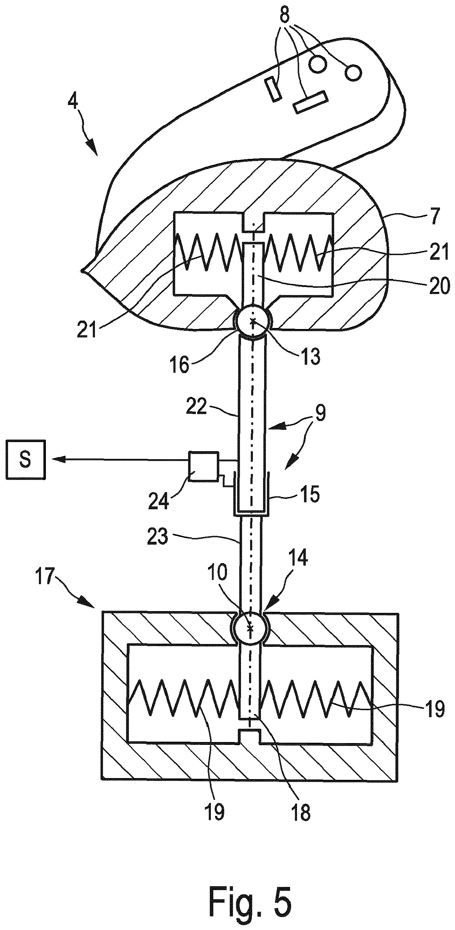

Der Schaft 9 erstreckt sich längs einer Hochachse 12 vertikal in Fahrzeughochrichtung, wobei die Hochachse 12 eine dritte Raumachse im Sinne der Erfindung bildet. Die Hochachse 12 schneidet die beiden Raumachsen 10 und 11 in ihrem Kreuzungspunkt. Der Schaft 9 ist zweigeteilt in einen oberen Schaftabschnitt 22 und einen unteren Schaftabschnitt 23. Der untere Schaftabschnitt 23 weist an seinem oberen Stirnendbereich eine zylindrische Lagerhülse 15 auf, die ein zylindrisches Schaftende des oberen Schaftabschnitts 22 koaxial umgreift und so ein Drehgelenk 15 für den oberen Schaftabschnitt 22 bildet. Der obere Schaftabschnitt 22 ist demzufolge um die Hochachse 12 drehbeweglich in der Lagerhülse des unteren Schaftabschnitts 23 gelagert. Die Lagerhülse ist fest mit dem unteren Schaftabschnitt 23 verbunden. Das Drehgelenk 15 ist in Abstand oberhalb des Mehrachsgelenks 14 des Schafts 9 positioniert, wie den Fig. 3 und 5 entnehmbar ist.

An einem oberen Endbereich des Schafts 9 ist relativ zu dem oberen Schaftabschnitt 22 ein Handauflagekörper 7 angeordnet, der mittels eines Kippgelenks 16 relativ zu dem oberen Schaftabschnitt 22 begrenzt drehbeweglich gelagert ist. Der Handauflagekörper 7 weist eine konvex gewölbte Handauflagefläche auf, die seitlich von einer zusätzlichen Bedienfläche flankiert ist, in der mehrere Bedienelemente 8 untergebracht sind.

Wie anhand der Fig. 3 und 5 erkennbar ist, definiert das Kippgelenk 16 eine vierte Raumachse 13, die sich zumindest weitgehend in Fahrzeugquerrichtung erstreckt. Beim dargestellten Ausführungsbeispiel ist die vierte Raumachse 13 gegenüber der ersten Raumachse 10 des Mehrachsgelenks 14 geringfügig geneigt, im Übrigen jedoch nahezu parallel zu der ersten Raumachse 10 ausgerichtet. Der Handauflagekörper 7 ist demzufolge um die vierte Raumachse 13 relativ zu dem oberen Schaftabschnitt 22 und damit relativ zu dem Schaft 9 begrenzt drehbeweglich. Eine entsprechende Drehbeweglichkeit des Handauflagekörpers 7 um das Kippgelenk 16 wird in Fig. 3 durch einen Doppelpfeil symbolisiert, der eine Drehbeweglichkeit D₄ definiert. Eine Drehbeweglichkeit um die als dritte Raumachse dienende Hochachse 12 des Handauflagekörpers 7 wird durch einen Doppelpfeil mit dem Bezugszeichen D₃ definiert. Ein Doppelpfeil D₂ definiert eine Schwenkbeweglichkeit des Handsteuerhebels 4 und damit des Handauflagekörpers 7 in Fahrzeuglängsrichtung nach vorne und nach hinten. Ein Doppelpfeil D₁, der längserstreckt zu der ersten Raumachse 10 ist, definiert eine Schwenkbeweglichkeit des Handsteuerhebels 4 und damit des Handauflagekörpers 7 in Fahrzeugquerrichtung nach links und nach rechts.

Der Schaft 9 des Handsteuerhebels 4 wird über Federrückstellmittel 19 in einer vertikal ausgerichteten Mittelstellung gehalten. Die Federrückstellmittel 19 werden beim dargestellten Ausführungsbeispiel durch mechanische Federn gebildet, die auf einen nach unten in das Trägergehäuse 17 hineinragenden Fortsatz 18 des unteren Schaftabschnitts 23 gegensinnig wirken. Anhand der Fig. 5 sind lediglich die Federrückstellmittel 19 vorgesehen, die bezüglich der in Fahrzeugquerrichtung erstreckten ersten Raumachse 10 eine entsprechende Rückstellung in die Mittelstellung bewirken. Weitere Federmittel sind auch für eine Rückstellung des Schafts 9 aus einer um die in Fahrzeuglängsrichtung erstreckte zweite Raumachse 11 verschwenkten Stellung vorgesehen, allerdings in den Zeichnungen nicht dargestellt.

Auch der Handauflagekörper 7, der mittels des Kippgelenks 16 relativ zu dem oberen Schaftabschnitt 22 um die vierte Raumachse 13 begrenzt drehbeweglich gelagert ist, wird durch Federelemente 21 in einer unbelasteten Mittelstellung gehalten. Die Federelemente 21 wirken gegensinnig zueinander und sind an einem oberen Hebelfortsatz 20 des Schaftabschnitts 22 einerseits und an Handauflagekörper 7 andererseits angelenkt. Entsprechende Rückstellkräfte der Federelemente 21 und der Federrückstellmittel 19 sind derart ausgeführt, dass eine auf den Handauflagekörper 7 in Fahrzeuglängsrichtung ausgerichtete Verschiebekraft, die der Fahrer mit seiner rechten Hand durch eine Unterarmverschiebung aufbringen kann, zu einer Auslenkung um die in Fahrzeugquerrichtung erstreckte Raumachse 10 führt, wobei der Handauflagekörper 7 bei einer derartigen Verschiebekraft in seiner Mittelstellung verbleibt.

Falls die Verschiebekraft idealisiert an einem oberen Scheitelpunkt des Handauflagekörpers 7 gemäß Fig. 5 angreift, so ist ein Drehmoment aus der Verschiebekraft multipliziert mit einem Abstand des Angriffspunkts der Verschiebekraft zur vierten Raumachse 13 kleiner als ein Drehmoment, das aus einer an dem Hebelfortsatz 20 angreifenden Rückstellkraft der Federelemente 21 multipliziert mit dem Abstand dieses Anlenkpunkts zu der vierten Raumachse 13 resultiert. Zudem ist ein Drehmoment, das die Verschiebekraft mit einem Abstand zwischen dem Angriffspunkt der Verschiebekraft und der unteren Raumachse 10 multipliziert, größer als ein Drehmoment, das aus der Rückstellkraft der Federrückstellmittel 19 multipliziert mit einem Abstand des Angriffspunkts dieser Rückstellkraft an dem Fortsatz 18 und der Raumachse 10 resultiert.

Falls ein Fahrer mit seiner rechten Hand daher lediglich eine Schwenkbewegung des Handauflagekörpers 7 um die Raumachse 10 in Fahrzeuglängsrichtung beabsichtigt, sind die Rückstellkräfte der Federelemente 21 so stark ausgelegt, dass der Handauflagekörper 7 während dieser Schwenkbewegung in seiner Mittelstellung relativ zu dem Hebelfortsatz 20 verbleibt. Falls der Fahrer F jedoch zusätzlich sein Handgelenk nach oben oder nach unten kippt, bewirkt diese zusätzliche Bewegung zwangsläufig ein Verdrehen des Handauflagekörpers 7 um das Kippgelenk 16, wodurch sich die zusätzliche vierte Drehbeweglichkeit des Handsteuerhebels 4 ergibt.

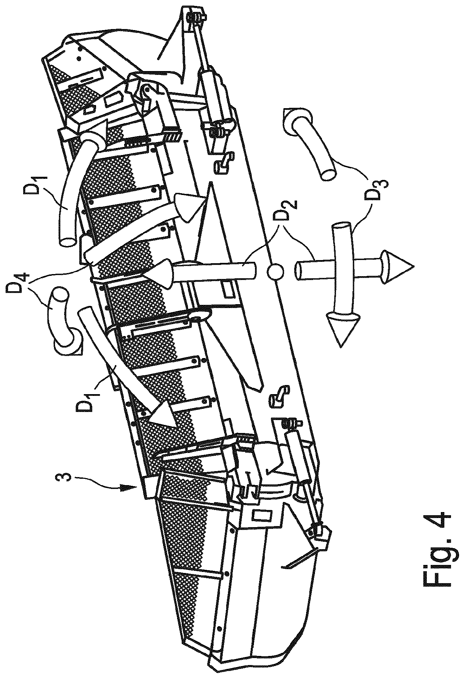

Mittels der vier beschriebenen Drehbeweglichkeiten D₁ bis D₄ steuert der Fahrer F den frontseitigen Räumschild 3 an. Anhand der Fig. 4 sind die Stellbeweglichkeiten des Räumschilds 3 über die dargestellten Doppelpfeile gezeigt. Diese Stellbeweglichkeiten sind mit den gleichen Bezugszeichen D₁ bis D₄ versehen, die den Drehbeweglichkeiten D₁ bis D₄ des Handsteuerhebels 4 entsprechen. Eine Verschwenkung des Handsteuerhebels 4 in Fahrzeuglängsrichtung nach vorne oder nach hinten bewirkt ein Anheben oder Absenken des Räumschilds 3 insgesamt. Ein Verschwenken des Handsteuerhebels 4 in Fahrzeugquerrichtung nach links oder nach rechts bewirkt ein Verkippen des Räumschilds 3 um eine horizontale Mittellängsachse nach links oder nach rechts. Eine Drehbewegung des Handsteuerhebels 4 um die als Hochachse gestaltete dritte Raumachse 12 bewirkt eine Verdrehung des Räumschilds 3 um eine vertikale Mittelachse. Eine Verdrehung des Handauflagekörpers 7 um die vierte Raumachse 13 bewirkt ein Kippen des Räumschilds 3 nach vorne oder nach hinten um eine in Fahrzeugquerrichtung erstreckte Kippachse, wodurch eine Neigung des Räumschilds relativ zu einem Untergrund einstellbar ist.

Durch die Definition der vier Drehbeweglichkeiten D₁ bis D₄ in Verbindung mit den korrespondierenden Stellbeweglichkeiten des Räumschilds 3 ist es für den Fahrer F möglich, den Räumschild 3 intuitiv zu steuern, da der Räumschild 3 Steuerbewegungen durchführt, die parallel oder korrespondierend zu den auf den Handsteuerhebel 4 ausgeübten Steuerbewegungen vorgesehen sind. Die Steuerung des Räumschilds 3 ist demzufolge für den Fahrer F einfach erlernbar und intuitiv handhabbar. Zudem ermöglicht die Anordnung und Gestaltung des Handsteuerhebels 4 eine ergonomisch einfache Handhabung, zumal der Handsteuerhebel 4 in der Bedienerplattform 6 seitlich neben der Sitzposition SP angeordnet ist.

## Patentansprüche

1. Kettenfahrzeug zur Schneepistengestaltung und -pflege mit einem Fahrerhaus (2), in dem ein Handsteuerhebel (4) um wenigstens drei zueinander verschiedene Raumachsen (10 bis 13) drehbar angeordnet ist, wobei jeder Drehbeweglichkeit jeweils eine Steuerfunktion wenigstens eines fahrzeugseitig angeordneten Funktionsteils (3) zugeordnet ist, wobei eine erste und eine zweite Raumachse (10, 11) einander in einer gemeinsamen Ebene kreuzen und eine Längs- und Querschwenkbarkeit des in Hochrichtung ausgerichteten Handsteuerhebels (4) definieren, und wobei die dritte Raumachse durch eine Hochachse (12) gebildet ist, die durch einen Kreuzungspunkt der beiden sich kreuzenden ersten und zweiten Raumachsen (10, 11) verläuft, **dadurch gekennzeichnet, dass** der Handsteuerhebel (4) einen relativ zu dem Handsteuerhebel (4) um eine vierte Raumachse (13) drehbeweglich gelagerten Handauflagekörper (7) aufweist, der in Abstand oberhalb des Kreuzungspunkts um die vierte Raumachse (13) begrenzt drehbar gelagert ist, dass jeder der vier Drehbeweglichkeiten (D₁ bis D₄) des Handsteuerhebels (4) jeweils eine Stelleinheit (5) eines frontseitigen Räumschilds (3) zugeordnet ist, die vier unterschiedliche Stellbeweglichkeiten des Räumschilds (3) ansteuern, und dass der frontseitige Räumschild (3) relativ zu einem Fahrgestell des Kettenfahrzeugs (1) um vier unterschiedliche Stellachsen verschwenkbar ist, von denen jede etwa parallel zu jeweils einer der vier Raumachsen (10 bis 13) des Handsteuerhebels (4) ausgerichtet ist.

2. Kettenfahrzeug nach Anspruch 1, **dadurch gekennzeichnet, dass** die erste und die zweite Raumachse (10, 11) in einem Doppelachsgelenk (14), insbesondere in einem Kugelgelenk, integriert sind, und dass die Drehbeweglichkeit (D₃) um die Hochachse (12) durch ein in Abstand oberhalb des Doppelachsgelenks (14) angeordnetes Drehgelenk (15) definiert ist.

3. Kettenfahrzeug nach Anspruch 1, **dadurch gekennzeichnet, dass** der Handauflagekörper (7) um die vierte Raumachse (13) mittels eines Kippgelenks (16) relativ zu dem Handsteuerhebel (4) gelagert ist.

4. Kettenfahrzeug nach Anspruch 2, **dadurch gekennzeichnet, dass** die erste und die zweite Raumachse (10, 11) des Doppelachsgelenks (14) in einer zumindest weitgehend horizontalen Fahrzeugebene angeordnet sind, wobei die erste Raumachse (10) zumindest weitgehend in einer Fahrzeugquerrichtung und die zweite Raumachse (11) rechtwinklig hierzu zumindest weitgehend in einer Fahrzeuglängsrichtung erstreckt sind.

5. Kettenfahrzeug nach einem der vorhergehenden Ansprüche, **dadurch gekennzeichnet, dass** die Hochachse (12) des Drehgelenks (15) zumindest weitgehend in Fahrzeughochrichtung erstreckt ist, und dass die vierte Raumachse (13) des Kippgelenks (16) sich zumindest weitgehend parallel zu der in Fahrzeugquerrichtung erstreckten ersten Raumachse (10) erstreckt.

6. Kettenfahrzeug nach einem der vorhergehenden Ansprüche, **dadurch gekennzeichnet, dass** dem Doppelachsgelenk (14) wenigstens für die erste Raumachse (10) gegensinnig zueinander wirksame Federrückstellmittel (19) für eine drehmomentabhängige Mittelausrichtung des Handsteuerhebels (4) relativ zu der ersten Raumachse (10) zugeordnet sind.

7. Kettenfahrzeug nach einem der vorhergehenden Ansprüche, **dadurch gekennzeichnet, dass** dem Kippgelenk (16) gegensinnig zueinander wirksame Federelemente (21) für eine drehmomentabhängige Rückstellung des Handauflagekörpers (7) in eine Mittelstellung zugeordnet sind.

8. Kettenfahrzeug nach Anspruch 6 und 7, **dadurch gekennzeichnet, dass** die Rückstellkräfte der Federelemente (21) und der Federrückstellmittel (19) in Bezug auf Drehmomentverhältnisse bezüglich des Kippgelenks (16) und bezüglich der ersten Raumachse (10) des Doppelachsgelenks (14) derart ausgeführt sind, dass eine auf den Handauflagekörper (7) wirkende, zumindest weitgehend in Fahrzeuglängsrichtung ausgerichtete Verschiebekraft des Fahrers (F) zu einer Auslenkung des Handsteuerhebels (4) um die erste Raumachse (10) des Doppelachsgelenks (14) führt, und dass der Handauflagekörper (7) bei Aufbringen der Verschiebekraft in seiner Mittelstellung verbleibt.

9. Kettenfahrzeug nach einem der vorhergehenden Ansprüche, **dadurch gekennzeichnet, dass** der Handsteuerhebel (4) derart zu einer Sitzposition (SP) des Fahrers (F) ausgerichtet ist, dass die Verschiebekraft zur Auslenkung des Handsteuerhebels (4) um die erste Raumachse (10) durch eine Unterarmverschiebung des Fahrers (F) aufbringbar ist.

10. Kettenfahrzeug nach einem der vorhergehenden Ansprüche, **dadurch gekennzeichnet, dass** der Handauflagekörper (7) und das Kippgelenk (16) relativ zum Handsteuerhebel (4) derart zu der Sitzposition (SP) des Fahrers (F) ausgerichtet sind, dass eine Kippbewegung eines Handgelenks des Fahrers (F) bei aufgelegter Hand nach oben oder nach unten zu einer Auslenkung des Handauflagekörpers (7) relativ zu der Mittelstellung führt.

11. Kettenfahrzeug nach einem der vorhergehenden Ansprüche, **dadurch gekennzeichnet, dass** der Handsteuerhebel (4) im Bereich des Handauflagekörpers (7) weitere manuell betätigbare Bedienelemente (8) aufweist, die derart zu einer Handauflagefläche des Handauflagekörpers (7) angeordnet sind, dass der Fahrer (F) die Bedienelemente (8) bei aufgelegter Hand mit jeweils wenigstens einem Finger der aufgelegten Hand bedienen kann.

## Claims

1. Tracked vehicle for snow piste landscaping and maintenance having a driver's cab (2) in which a manual control lever (4) is arranged to be rotatable about at least three mutually different spatial axes (10 to 13), wherein a respective control function of at least one function part (3) disposed on the vehicle is associated to each rotational mobility, wherein a first and a second spatial axis (10, 11) intersect in a common plane and define longitudinal and transverse pivoting mobility of the manual control lever (4) oriented in the vertical direction, and wherein the third spatial axis is a vertical axis (12) extending through an intersection point of the two intersecting first and second spatial axes (10, 11),
**characterized in that**
the manual control lever (4) includes a hand rest body (7) mounted to be rotatable about a fourth spatial axis (13) relative to the manual control lever (4), which body is mounted at a distance above the intersection point to be rotatable to a limited extent about the fourth spatial axis (13), **in that** each of the four rotational mobilities (D₁ to D₄) of the manual control lever (4) is associated with a respective adjusting unit (5) of a front side rake blade (3), which adjusting units control four different adjusting motions of the rake blade (3), and **in that** the front side rake blade (3) is pivotable about four different adjusting axes relative to a chassis of the tracked vehicle (1), each of the axes being oriented approximately parallel to a respective one of the four spatial axes (10 to 13) of the manual control lever (4).

2. Tracked vehicle according to claim 1, **characterized in that** the first and the second spatial axes (10, 11) are integrated in a double axis joint (14), in particular in a ball joint, and **in that** the rotational mobility (D₃) about the vertical axis (12) is defined by a swivel joint (15) disposed at a distance above the double axis joint (14).

3. Tracked vehicle according to claim 1, **characterized in that** the hand rest body (7) is mounted about the fourth spatial axis (13) by means of a tilt joint (16) relative to the manual control lever (4).

4. Tracked vehicle according to claim 2, **characterized in that** the first and the second spatial axes (10, 11) of the double axis joint (14) are disposed in an at least largely horizontal vehicle plane, wherein the first spatial axis (10) extends at least largely in a vehicle transverse direction and the second spatial axis (11) extends perpendicular thereto at least largely in a vehicle longitudinal direction.

5. Tracked vehicle according to any one of the preceding claims, **characterized in that** the vertical axis (12) of the swivel joint (15) extends at least largely in the vehicle vertical direction, and **in that** the fourth spatial axis (13) of the tilt joint (16) extends at least largely parallel to the first spatial axis (10) extending in the vehicle transverse direction.

6. Tracked vehicle according to any one of the preceding claims, **characterized in that** the double axis joint (14) is associated with spring resetting means (19), acting in mutually opposite directions at least for the first spatial axis (10), for torque-controlled central orientation of the manual control lever (4) relative to the first spatial axis (10).

7. Tracked vehicle according to any one of the preceding claims, **characterized in that** the tilt joint (16) is associated with spring elements (21), acting in mutually opposite directions, for torque-controlled return of the hand rest body (7) to a central position.

8. Tracked vehicle according to claim 6 and 7, **characterized in that** the resetting forces of the spring elements (21) and the spring resetting means (19) in relation to torque ratios related to the tilt joint (16) and related to the first spatial axis (10) of the double axis joint (14) are configured such that a shifting force of the driver (F) acting on the hand rest body (7) and oriented at least largely in the vehicle longitudinal direction causes deflection of the manual control lever (4) about the first spatial axis (10) of the double axis joint (14), and **in that** the hand rest body (7) remains in its central position during application of the shifting force.

9. Tracked vehicle according to any one of the preceding claims, **characterized in that** the manual control lever (4) is oriented in relation to a sitting position (SP) of the driver (F) such that the shifting force for deflecting the manual control lever (4) about the first spatial axis (10) is applicable by shifting of the forearm of the driver (F).

10. Tracked vehicle according to any one of the preceding claims, **characterized in that** the hand rest body (7) and the tilt joint (16) relative to the manual control lever (4) are oriented to the sitting position (SP) of the driver (F) such that a tilting movement upwards or downwards of a wrist of the driver (F), while a hand is placed on, causes deflection of the hand rest body (7) relative to the central position.

11. Tracked vehicle according to any one of the preceding claims, **characterized in that** the manual control lever (4) includes, in the vicinity of the hand rest body (7), further manually operable operating elements (8) which are disposed in relation to a hand rest surface of the hand rest body (7) such that the driver (F), while a hand is placed on, can operate the operating elements (8) with in each case at least one finger of the placed-on hand.

## Revendications

1. Véhicule à chenilles pour l'aménagement et l'entretien de pistes enneigeés avec une cabine du conducteur (2) où un levier de commande manuelle (4) est disposé de façon rotative autour d'au moins trois axes dans l'espace (10 à 13) différents l'un de l'autre, dans lequel une fonction de commande respective d'au moins une partie fonctionnelle (3) disposée sur le véhicule est associée à chaque mobilité rotationnelle, dans lequel un premier et un deuxième axe dans l'espace (10, 11) se croisent dans un plan commun et définissent un mouvement pivotant longitudinal et transversal du levier de commande manuelle (4) orienté vers la direction verticale, et dans lequel le troisième axe dans l'espace est un axe vertical (12) s'étendant à travers un point d'intersection des deux axes croisés du premier et deuxième axe dans l'espace (10, 11),
**caractérisé en ce que**
le levier de commande manuelle (4) présente un corps de repose-main (7) disposé de manière à tourner autour d'un quatrième axe dans l'espace (13) par rapport au levier de commande manuelle (4), le corps étant disposé à une distance au-dessus du point d'intersection et tournant de manière limitée autour du quatrième axe dans l'espace (13), **en ce que** chacune des mobilités rotationnelles (D₁ à D₄) du levier de commande manuelle (4) est associée à une unité de réglage (5) respective d'une lame de niveleuse (3) frontale, les unités de réglage (5) commandant quatre mobilités de réglage différentes de la lame de niveleuse (3), et **en ce que** la lame de niveleuse (3) frontale est pivotante par rapport à un châssis du véhicule à chenilles (1) autour de quatre axes de réglage différents, chacun des axes de réglage étant orienté approximativement parallèle à un respectif des quatre axes dans l'espace (10 à 13) du levier de commande manuelle (4).

2. Véhicule à chenilles selon la revendication 1, **caractérisé en ce que** le premier et le deuxième axe dans l'espace (10, 11) sont intégrés dans une articulation à deux axes (14), en particulier une articulation sphérique, et **en ce que** la mobilité rotationnelle (D₃) autour de l'axe vertical (12) est définie par une articulation pivotante (15) disposée à une distance au-dessus de l'articulation à deux axes (14).

3. Véhicule à chenilles selon la revendication 1, **caractérisé en ce que** le corps de repose-main (7) est disposé autour du quatrième axe dans l'espace (13) au moyen d'une articulation de bascule (16) par rapport au levier de commande manuelle (4).

4. Véhicule à chenilles selon la revendication 2, **caractérisé en ce que** le premier et le deuxième axe dans l'espace (10, 11) de l'articulation à deux axes (14) sont disposés dans un plan de véhicule au moins largement horizontal, dans lequel le premier axe dans l'espace (10) s'étend au moins largement vers une direction transversale du véhicule et le deuxième axe dans l'espace (11) s'étend perpendiculaire à celui-ci au moins largement vers une direction longitudinale du véhicule.

5. Véhicule à chenilles selon l'une quelconque des revendications précédentes, **caractérisé en ce que** l'axe vertical (12) de l'articulation pivotante (15) s'étend au moins largement vers la direction verticale du véhicule, et **en ce que** le quatrième axe dans l'espace (13) de l'articulation de bascule (16) s'étend au moins largement parallèle au premier axe dans l'espace (10) s'étendant vers la direction transversale du véhicule.

6. Véhicule à chenilles selon l'une quelconque des revendications précédentes, **caractérisé en ce que** l'articulation à deux axes (14) est associée à moyens de rappel de ressort (19), agissant en directions opposées au moins pour le premier axe dans l'espace (10), pour une orientation centrale du levier de commande manuelle (4) par rapport au premier axe dans l'espace (10) en fonction de moment de couple.

7. Véhicule à chenilles selon l'une quelconque des revendications précédentes, **caractérisé en ce que** l'articulation de bascule (16) est associée à des éléments de ressort (21), agissant en directions opposées, pour un rappel du corps de repose-main (7) à une position centrale en fonction de moment de couple.

8. Véhicule à chenilles selon la revendication 6 et 7, **caractérisé en ce que** les forces de rappel des éléments de ressort (21) et des moyens de rappel de ressort (19) en relation aux rapports de moment de couple quant à l'articulation de bascule (16) et quant au premier axe dans l'espace (10) de l'articulation à deux axes (14) sont configurés de telle manière qu'une force de déplacement du conducteur (F) agissant sur le corps de repose-main (7) et orientée au moins largement vers la direction longitudinale du véhicule produit une déviation du levier de commande manuelle (4) autour du premier axe dans l'espace (10) de l'articulation à deux axes (14), et **en ce que** le corps de repose-main (7) reste dans sa position centrale lors de l'application de la force de déplacement.

9. Véhicule à chenilles selon l'une quelconque des revendications précédentes, **caractérisé en ce que** le levier de commande manuelle (4) est orienté par rapport à une position assise (SP) du conducteur (F) de telle manière que la force de déplacement pour la déviation du levier de commande manuelle (4) autour du premier axe dans l'espace (10) peut être appliquée par un déplacement du bras avant du conducteur (F).

10. Véhicule à chenilles selon l'une quelconque des revendications précédentes, **caractérisé en ce que** le corps de repose-main (7) et l'articulation de bascule (16) relative au levier de commande manuelle (4) sont orientés à la position assise (SP) du conducteur (F) de telle manière qu'un mouvement basculant vers le haut ou vers le bas d'un poignet du conducteur (F), alors qu'une main est appuyée, produit une déviation du corps de repose-main (7) par rapport à la position centrale.

11. Véhicule à chenilles selon l'une quelconque des revendications précédentes, **caractérisé en ce que** le levier de commande manuelle (4) présente, à proximité du corps de repose-main (7), des éléments d'opération (8) supplémentaires actionnés manuellement, disposés par rapport à une surface de support de main du corps de repose-main (7) de telle manière que le conducteur (F), alors qu'une main est appuyée, peut actionner les éléments d'opération (8) respectivement par au moins un doigt de la main appuyée.
